# FASCICULE DE BREVET EUROPEEN

(11) **EP 1 043 213 B1**
(45) Date de publication et mention de la délivrance du brevet: **28.04.2004**
(21) Numéro de dépôt: 00400893.4
(22) Date de dépôt: 31.03.2000
(51) Int. Cl.: B62D 15/00

(54) **Dispositif d'assistance au contrôle des déplacements d'un véhicule automobile, notamment en vue de son parcage**
Hilfseinrichtung zum Steuern der Bewegung eines Kraftfahrzeuges, insbesondere im Hinblick auf sein Einparken
Assistance device for controlling the moving of an automotive vehicle, especially in view of its parking

(30) Priorité: 09.04.1999 FR 9904439
(43) Date de publication de la demande: 11.10.2000
(73) Titulaire: Renault s.a.s., 92100 Boulogne Billancourt (FR)
(72) Inventeur: Perrin, Bertrand, 92500 Rueil Malmaison (FR); Hamidi, Massoud, 92380 Garches (FR)

(56) Documents cités:
- EP-A- 0 835 796
- DE-A- 3 813 083

## Description

L'invention concerne un dispositif d'assistance au contrôle des déplacements d'un véhicule automobile.

L'invention concerne plus particulièrement un dispositif d'assistance au contrôle des déplacements d'un véhicule automobile selon le préambule de la revendication 1.

On connaît de nombreux exemples de dispositifs de ce type. DE 38 13 083 contient les caractéristiques mentionnées dans le préambule de la revendication 1.

Le document FR-A-2.728.859 décrit un dispositif qui comporte des moyens de détection permettant de mesurer la position relative entre le véhicule et des obstacles déterminant un emplacement de parcage en vue du stationnement. Les mesures collectées par les moyens de détection sont transmises à un micro ordinateur qui informe le conducteur de la position du véhicule et élabore à son intention des consignes de manoeuvre simples pour lui permettre de garer son véhicule.

Le document US-A-4.931.930 décrit et représente un dispositif d'assistance au conducteur qui comporte, d'une façon analogue, des moyens de détection qui permettent de mesurer la position relative entre le véhicule et les obstacles déterminant l'emplacement de parcage. Les mesures collectées par les moyens de détection sont transmises à un micro-ordinateur qui, sélectivement, informe le conducteur de la position du véhicule ou contrôle des moyens de mobilité du véhicule pour contrôler les déplacements du véhicule dans la direction appropriée.

Dans un tel dispositif, lorsque la manoeuvre de parcage est commandée par le micro-ordinateur, le conducteur n'a aucun moyen d'action sur la manoeuvre du véhicule.

Le conducteur peut en effet interrompre la manoeuvre, mais il ne peut en modifier l'exécution.

En particulier, le micro-ordinateur contrôlant la vitesse du véhicule, il peut effectuer la manoeuvre à une vitesse rapide qui ira à l'encontre d'un sentiment de sécurité du conducteur et de ses éventuels passagers.

On a en effet constaté que lorsqu'un conducteur effectue lui-même une manoeuvre de parcage, ou plus généralement lorsqu'il conduit le véhicule à l'approche d'un obstacle, il tend à réduire la vitesse du véhicule à mesure que celui-ci se rapproche de l'obstacle, notamment par une action de "pompage" sur les freins du véhicule qui permet d'obtenir une décélération marquée du véhicule et confère au conducteur la sensation sécurisante que le véhicule a réagi correctement suivant ses commandes.

Or, aucun des dispositifs d'assistance connus ne propose une telle possibilité.

L'invention propose un dispositif qui permet de résoudre cet inconvénient et qui permet de restituer le sentiment de sécurité qu'éprouve un conducteur lorsqu'il conduit lui même son véhicule.

Dans ce but, l'invention propose un dispositif d'assistance selon la revendication 1.

Selon d'autres caractéristiques de l'invention :
- la loi de vitesse est une loi continue qui est définie suivant trois intervalles successifs de distance dégressive du véhicule par rapport à l'obstacle, un premier intervalle, correspondant au début d'une manoeuvre assistée, dans lequel le module électronique commande une montée en vitesse du véhicule jusqu'à une vitesse maximale de manoeuvre, un deuxième intervalle dans lequel le module électronique commande le maintien du véhicule à la vitesse maximale de manoeuvre, et un troisième intervalle correspondant à la fin de la manoeuvre de stationnement et dans lequel le module électronique commande la réduction de la vitesse depuis la vitesse maximale de manoeuvre jusqu'à une vitesse nulle d'arrêt en fin de manoeuvre,
- le troisième intervalle comporte une étape dans laquelle le module électronique commande une réduction de la vitesse qui est marquée par une décélération sensible de manière à informer le conducteur du véhicule de la détection de l'obstacle,
- les moyens de détection comportent des capteurs longitudinaux arrière et/ou avant de proximité qui sont susceptibles de déterminer la distance du véhicule par rapport à des obstacles situés dans des zones arrière et/ou avant longitudinales et/ou latérales du véhicule,
- les moyens de détection comportent des capteurs latéraux de proximité qui sont susceptibles déterminer la distance du véhicule par rapport à des obstacles situés dans des zones latérales du véhicule,
- les capteurs liés à des organes du véhicule comportent notamment un capteur de régime du moteur, un capteur de la position d'un embrayage, un capteur du rapport engagé d'une boîte de vitesses du véhicule, un capteur d'un état des freins du véhicule, et un système odométrique lié aux roues du véhicule,
- le système odométrique comporte des moyens pour capter la rotation de deux roues opposées d'un même essieu du véhicule,
- les éléments de mobilité du véhicule commandés par le module électronique de commande comportent notamment une direction, un moteur, une transmission, et des freins du véhicule,
- le dispositif d'assistance est activé manuellement par le conducteur du véhicule après qu'il ait agi sur un élément de mobilité du véhicule, notamment sur un organe d'enclenchement de la marche arrière du véhicule,
- le dispositif d'assistance est activé automatiquement lorsque le conducteur agit sur un élément de mobilité du véhicule, notamment sur un organe d'enclenchement de la marche arrière du véhicule.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique de dessus d'un véhicule équipé d'un dispositif d'assistance réalisé conformément à l'invention ;
- la figure 2 est un organigramme du fonctionnement d'un module électronique de commande selon l'invention ;
- la figure 3 est un schéma représentant la vitesse du véhicule en fonction de la distance du véhicule à un obstacle conformément à une première loi de vitesse déterminée par le module électronique de commande selon l'invention ; et
- la figure 4 est un schéma représentant la vitesse du véhicule en fonction de la distance du véhicule à un obstacle conformément à une deuxième loi de vitesse déterminée par le module électronique de commande selon l'invention.

Dans la description qui va suivre, des chiffres de référence identiques désignent des éléments identiques ou ayant des fonctions similaires.

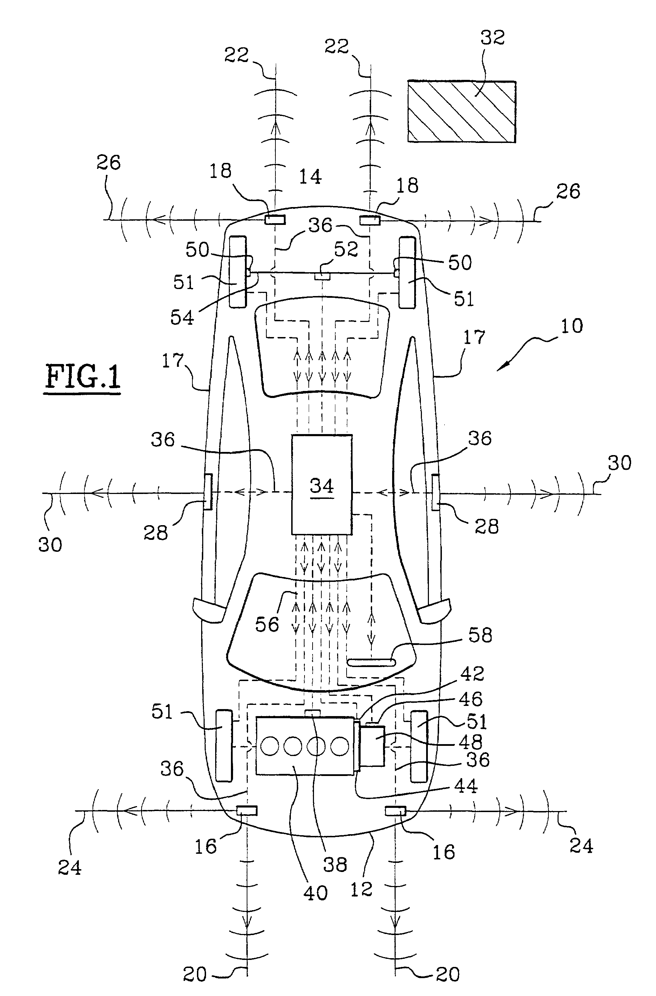

On a représenté à la figure 1 un véhicule automobile 10 équipé d'un dispositif d'assistance du contrôle de ses déplacements réalisé conformément à l'invention.

De manière connue, le véhicule 10 comporte au moins une partie d'extrémité avant 12 et une partie d'extrémité arrière 14 dont chacune est munie de moyens de détection d'un obstacle.

La partie d'extrémité avant 12 comporte des capteurs avant 16 de proximité et la partie d'extrémité arrière 14 comporte des capteurs arrière 18 de proximité. Les capteurs avant 16 et arrière 18 de proximité sont, dans le mode de réalisation préféré de l'invention, des capteurs longitudinaux et latéraux de proximité qui émettent respectivement, longitudinalement et latéralement dans une zone proche du véhicule 10, des faisceaux de mesure longitudinaux avant 20 et arrière 22 et des faisceaux de mesure latéraux avant 24 et arrière 26.

Dans le mode de réalisation préféré de l'invention, le véhicule 10 comporte de surcroît, sur des flancs 17, des capteurs latéraux 28 de proximité qui émettent des faisceaux latéraux 30 transversalement par rapport à la direction générale longitudinale du véhicule 10.

Sur la figure 1, on a représenté un véhicule 10 comportant seulement deux capteurs latéraux 28 mais, de façon non limitative de l'invention, le véhicule 10 peut comporter plusieurs paires de capteurs latéraux 28 répartis régulièrement de l'avant vers l'arrière de celui-ci.

Les faisceaux de mesure 20, 22, 24, 26 et 30 qui sont émis respectivement par les capteurs 16,18, et 28 du véhicule 10 sont des faisceaux qui permettent la détermination de la distance entre le véhicule 10 et un obstacle 32, représenté sur la figure 1 à proximité de la partie 14 arrière d'extrémité du véhicule 10. Les faisceaux 20, 22, 24, 26 et 30 sont par exemple des faisceaux d'ultrasons ou de rayonnements infrarouges.

De manière connue, les capteurs de proximité 16, 18 et 28 du véhicule 10 sont susceptibles de fournir des informations représentatives de la distance du véhicule 10 à l'obstacle 32. Ces informations sont envoyées vers un module 34 électronique de commande par l'intermédiaire de liaisons 36, qui sont par exemple des liaisons analogiques parcourues par un courant basse tension, ou des liaisons numériques électriques et/ou optiques de type bus.

De manière connue, le module électronique 34 de commande est aussi susceptible de recevoir des informations en provenance d'organes du véhicule. Ainsi, le module électronique 34 de commande est susceptible de recevoir des informations en provenance d'un capteur 38 de la vitesse de rotation d'un moteur 40, d'un capteur 42 de la position active ou inactive de l'embrayage 44, d'un capteur 46 du rapport engagé d'une boîte de vitesses 48, d'au moins un capteur 50 - et de préférence quatre capteurs 50 - de frein(s) 51 du véhicule, et d'un système odométrique 52 lié aux roues du véhicule. Le système odométrique est notamment, et de façon non limitative de l'invention, lié à un essieu arrière 54 du véhicule 10.

Dans le mode de réalisation préféré de l'invention, le système odométrique 52 comporte au moins deux capteurs de la rotation de deux roues opposées (non représentées) de l'essieu 54 du véhicule de façon à déterminer une différence de vitesse de rotation entre les deux roues opposées du même essieu 54. L'information transmise par le système odométrique 52 au module 34 électronique de commande permet par exemple, en calculant la différence de vitesse entre les roues de l'essieu 54, et donc de déterminer un angle de braquage réel du véhicule 10.

Les différents organes du véhicule 10 transmettent les informations au module électronique de commande par l'intermédiaire de liaisons analogiques et/ou numériques 56 qui sont du même type que les liaisons 36 précédemment utilisées en liaison avec les capteurs longitudinaux et/ou latéraux 16,18, et 28 du véhicule.

Le module électronique 34 de commande est susceptible de commander des éléments de mobilité du véhicule, notamment une direction 58, le moteur 40, une transmission qui comporte l'embrayage 44, et la boîte de vitesses 48 et les freins 50 du véhicule. Avantageusement, dans le mode de réalisation préféré de l'invention, les liaisons 56 des capteurs 38 du moteur 40, 42 de l'embrayage 44, 46 de la boîte de vitesses 48 et 50 des freins 51 du véhicule sont non seulement capables, comme précédemment décrit, de transmettre des informations au module électronique de commande 34, mais aussi de transmettre des ordres de commande en provenance du module électronique 34 vers les éléments de mobilité du véhicule.

Le module 34 électronique de commande est avantageusement susceptible d'être activé soit manuellement par le conducteur du véhicule, notamment lorsque le conducteur désire effectuer une manoeuvre de parcage, soit automatiquement par les capteurs avant 16, arrière 18 et latéraux 28.

En effet le module 34 électronique de commande peut être préalablement placé dans un mode de veille par le conducteur du véhicule, et être activé à partir de ce mode de veille par un des capteurs avant 16, arrière 18 et latéraux 28, lorsque celui-ci détecte un obstacle, pour commander les déplacements du véhicule 10 en fonction des informations de distance fournies par ces capteurs et en fonction des informations transmises par les organes du véhicule.

En variante, le module 34 électronique de commande peut aussi être activé automatiquement lorsque le conducteur agit sur un des éléments de mobilité du véhicule, notamment sur un organe d'enclenchement de la marche arrière du véhicule, tel qu'un levier de changement de rapports de la boîte de vitesses 48.

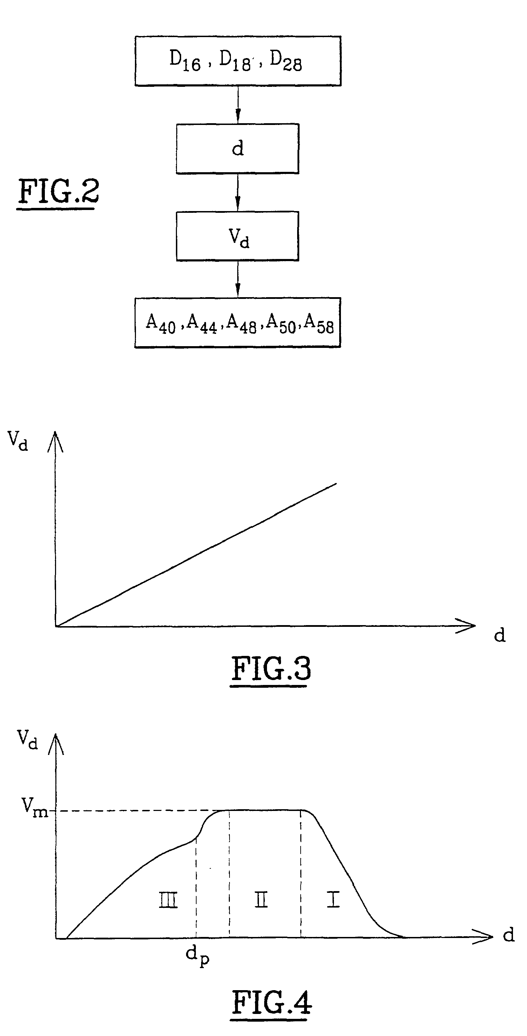

Ainsi, comme l'illustre la figure 2, le module électronique commande dans une première étape la détection de l'obstacle en émettant des ordres de détection D16, D18 et D28 à l'intention des capteurs de proximité avant 16, arrière 18 et latéraux 28. Dans une deuxième étape, ces capteurs 16, 18 et 28 transmettent des informations au module 34 électronique de commande qui détermine par calcul une distance "d" qui est représentative de la distance du véhicule 10 à l'obstacle 32. Dans une étape suivante, le module électronique de commande établit une vitesse V_{d} des déplacements du véhicule 10 qui est régie par une loi de vitesse qui sera décrite ultérieurement en référence aux figures 3 et 4 de façon à, dans une quatrième et dernière étape, commander les éléments de mobilité du véhicule 10 selon des ordres A₄₀, A₄₄, A₄₈, A₅₁, A₅₈ émis respectivement à l'intention du moteur 40, de l'embrayage 44, de la boîte 48, des freins 51, et de la direction 58.

Conformément à l'invention, et comme représenté en référence à la figure 3, la loi de vitesse du véhicule 10 qui détermine la vitesse V_{d} du véhicule en fonction de sa distance "d" à l'obstacle est dégressive à mesure que le véhicule se rapproche de l'obstacle 32 détecté.

Ainsi, selon une première loi de vitesse linéaire, le véhicule 10 voit sa vitesse V_{d} réduire progressivement à mesure que la distance "d" du véhicule 10 à l'obstacle 32 diminue. Cette configuration est représentée à la figure 3.

Toutefois, dans le but de conférer au conducteur du véhicule un sentiment de sécurité analogue à celui qu'il ressentirait s'il était lui-même aux commandes du véhicule 10, la loi de vitesse peut être, selon un deuxième mode de réalisation préféré de l'invention, une loi continue définie suivant trois intervalles I, II, III successifs correspondants à des intervalles dégressifs de distance "d" du véhicule 10 par rapport à l'obstacle 32.

Cette configuration, qui trouve notamment application lors d'une manoeuvre de parcage du véhicule 10, est représentée à la figure 4.

La loi de vitesse comporte en effet un premier intervalle I qui correspond au début de la manoeuvre assistée dans lequel le module électronique 34 commande une montée en vitesse du véhicule 10 jusqu'à une vitesse maximale Vₘ de manoeuvre. Ce premier intervalle I correspond par exemple à une configuration dans laquelle le conducteur souhaite effectuer un créneau pour parquer son véhicule et active le module électronique de commande 34 à partir d'une vitesse nulle du véhicule.

Puis, dans un deuxième intervalle II, le module 34 électronique commande le maintien du véhicule 10 à la vitesse Vₘ maximale de manoeuvre.

Cette configuration correspond par exemple à un moment intermédiaire de la manoeuvre de parcage, alors que l'obstacle 32 est suffisamment éloigné du véhicule 10 pour que le module électronique 34 de commande puisse commander une manoeuvre rapide du véhicule 10. Ceci présente par exemple l'avantage, dans le cas d'une manoeuvre en créneau, de libérer rapidement la file de roulement dans laquelle le véhicule 10 s'était initialement arrêté avant d'effectuer le créneau, pour permettre la circulation d'autres véhicules.

Enfin, dans un troisième intervalle III de la loi de vitesse qui correspond à la fin de la manoeuvre de parcage, le module électronique 34 de commande la réduction de la vitesse V_{d} depuis la vitesse maximale Vₘ jusqu'à une vitesse nulle d'arrêt en fin de manoeuvre, et ceci de manière sensiblement linéaire.

Dans ce troisième intervalle III, la loi de vitesse peut être une loi sensiblement linéaire et dégressive du type de celle décrite en référence à la figure 3, mais elle est préférentiellement une loi de vitesse qui comporte une réduction de la vitesse V_{d} marquée par une décélération sensible de manière à informer le conducteur du véhicule de la détection de l'obstacle. En effet, lorsque le véhicule parvient à une distance de proximité dₚ de l'obstacle 32, le module électronique 34 est susceptible de commander une réduction marquée de la vitesse V_{d} correspondant à une décélération marquée mais non brutale qui permet d'informer le conducteur que le module électronique de commande 34 et les capteurs 16, 18 et 28 ont bien détecté l'obstacle. Ceci permet avantageusement au conducteur, en cas de difficulté de détection de l'obstacle 32, de désactiver le module électronique 34 de commande pour reprendre le contrôle manuel du véhicule 10.

Avantageusement, le conducteur ressent ainsi les mêmes sensations que s'il effectuait lui-même la manoeuvre de parcage du véhicule et "pompait" sur les freins 51 du véhicule à l'approche de l'obstacle 32.

Le dispositif d'assistance au contrôle des déplacements du véhicule 10 propose ainsi avantageusement un dispositif permettant notamment de parquer rapidement un véhicule tout en restituant au conducteur les sensations qu'il aurait en effectuant lui-même la manoeuvre.

## Revendications

1. Dispositif d'assistance au contrôle des déplacements d'un véhicule automobile (10), notamment en vue d'une manoeuvre de parcage, du type dans lequel le véhicule (10) comporte au moins une partie d'extrémité (14, 16 ,17) munie de moyens de détection d'un obstacle (32), notamment au moins un capteur (16, 18, 28) longitudinal et/ou latéral de proximité qui émet longitudinalement et/ou latéralement, dans une zone porche du véhicule (10), au moins un faisceau (20, 24, 30) de mesure pour la détermination de la distance (d) entre l'extrémité (14, 16, 17) du véhicule et l'obstacle (32), du type qui comporte un module (34) électronique de commande, qui est susceptible de recevoir des informations représentatives des déplacements du véhicule en provenance des moyens de détection et de différents capteurs (38, 42, 46, 50) liés à des organes du véhicule (10) notamment pour, lorsque le dispositif d'assistance est activé, contrôler les déplacements du véhicule,
le module (34) électronique de commande contrôlant des éléments de mobilité du véhicule selon une loi de vitesse (Vd) dégréssive du véhicule (10) **caractérisé en ce que** cette loi de vitesse est linéaire au moins à proximité de cet obstacle (32).

2. Dispositif d'assistance selon la revendication 1, **caractérisé en ce que** la loi de vitesse (Vd) est une loi continue qui est définie suivant trois intervalles successifs (I, II, III) de distance (d) dégressive du véhicule (10) par rapport à l'obstacle (32):
- un premier intervalle (1) correspondant au début d'une manoeuvre assistée dans lequel le module (34) électronique commande une montée en vitesse du véhicule (10) jusqu'à une vitesse maximale (Vₘ) de manoeuvre,
- un deuxième intervalle (II) dans lequel le module (34) électronique commande le maintien du véhicule (10) à la vitesse maximale (Vₘ) de manoeuvre, et
- un troisième intervalle (III) correspondant à la fin de la manoeuvre de stationnement et dans lequel le module (34) électronique commande la réduction de la vitesse (V_{d}) depuis la vitesse maximale (Vₘ) de manoeuvre jusqu'à une vitesse nulle d'arrêt en fin de manoeuvre.

3. Dispositif d'assistance selon la revendication 2, **caractérisé en ce que** le troisième intervalle (III) comporte une étape dans laquelle le module électronique (34) commande une réduction de la vitesse (V_{d}) qui est marquée par une décélération sensible de manière à informer le conducteur du véhicule de la détection de l'obstacle (32).

4. Dispositif d'assistance selon l'une quelconque des revendications précédentes, **caractérisé en ce que** les moyens de détection comportent des capteurs longitudinaux (16, 18) arrière et/ou avant de proximité qui sont susceptibles de déterminer la distance (d) du véhicule (10) par rapport à des obstacles (32) situés dans des zones arrière et/ou avant longitudinales et/ou latérales du véhicule (10).

5. Dispositif d'assistance selon l'une quelconque des revendications précédentes, **caractérisé en ce que** les moyens de détection comportent des capteurs latéraux (28) de proximité qui sont susceptibles de déterminer la distance (d) du véhicule (10) par rapport à des obstacles (32) situés dans des zones latérales du véhicule (10).

6. Dispositif d'assistance selon l'une quelconque des revendications précédentes, **caractérisé en ce que** les capteurs liés à des organes du véhicule (10) comportent notamment un capteur (38) de régime du moteur (40), un capteur (42) de la position d'un embrayage (44), un capteur (46) du rapport engagé d'une boîte de vitesses (48) du véhicule (10), un capteur (50) d'un état des freins (51) du véhicule (10), et un système odométrique (52) lié aux roues du véhicule.

7. Dispositif d'assistance selon la revendication précédente, **caractérisé en ce que** le système odométrique (52) comporte des moyens pour capter la rotation de deux roues opposées d'un même essieu (54) du véhicule (10).

8. Dispositif d'assistance selon l'une quelconque des revendications précédentes, **caractérisé en ce que** les éléments de mobilité du véhicule (10) commandés par le module électronique de commande comportent notamment une direction (58), un moteur (40), une transmission (44,48), et des freins (51) du véhicule (10).

9. Dispositif d'assistance selon l'une quelconque des revendications précédentes, **caractérisé en ce qu'**il est activé manuellement par le conducteur du véhicule (10) après qu'il ait agi sur un élément de mobilité du véhicule, notamment sur un organe (48) d'enclenchement de la marche arrière du véhicule.

10. Dispositif d'assistance selon l'une quelconque des revendications 1 à 8, **caractérisé en ce qu'**il est activé automatiquement lorsque le conducteur agit sur un élément de mobilité du véhicule, notamment sur un organe (48) d'enclenchement de la marche arrière du véhicule.

## Patentansprüche

1. Vorrichtung zur Unterstützung bei der Steuerung der Bewegung eines Kraftfahrzeugs (10), insbesondere im Hinblick auf ein Parkmanöver, vom Typ in dem das Fahrzeug (10) mindestens eine Endpartie (14, 16, 17) aufweist, die mit Mitteln zur Entdeckung eines Hindernisses (32) ausgestattet ist, insbesondere mindestens einem Längsabstandssensor und/oder einem Seitenabstandssensor (16, 18, 28), der in Längsrichtung und/oder seitlicher Richtung in einem Bereich nahe des Fahrzeugs (10) mindestens einen Messstrahl (20, 24, 30) zur Bestimmung des Abstands (d) zwischen dem Ende (14, 16, 17) des Fahrzeugs und dem Hindernis (32) aussendet, vom Typ der ein elektronisches Steuermodul (34) aufweist, das Informationen aufnehmen kann, die für die Bewegungen des Fahrzeugs repräsentativ sind und die von Detektionsmitteln und verschiedenen Sensoren (38, 42, 46, 50) stammen, die mit Teilen des Fahrzeugs (10) verbunden sind, insbesondere um, wenn die Vorrichtung zur Unterstützung aktiviert ist, die Bewegungen des Fahrzeugs zu steuern, wobei das elektronische Steuermodul (34) die Elemente der Beweglichkeit des Fahrzeugs nach einem degressiven Verlauf der Geschwindigkeit (Vd) des Fahrzeugs (10) steuert,
**dadurch gekennzeichnet, dass** dieser Verlauf der Geschwindigkeit zumindest in der Nähe dieses Hindernisses (32) linear ist.

2. Vorrichtung zur Unterstützung gemäß Anspruch 1, **dadurch gekennzeichnet, dass** der Verlauf der Geschwindigkeit (Vd) ein kontinuierlicher Verlauf ist, der gemäß drei aufeinanderfolgenden Intervallen (I, II, III) mit degressivem Abstand (d) des Fahrzeugs (10) im Verhältnis zum Hindernis (32) definiert ist:
- ein erstes Intervall (I), das dem Beginn eines unterstützten Manövers entspricht, in dem das elektronische Modul (34) einen Anstieg der Geschwindigkeit des Fahrzeugs (10) befiehlt, bis zu einer maximalen Geschwindigkeit (Vₘ) des Manövers,
- ein zweites Intervall (II), in dem das elektronische Modul (34) befiehlt, das Fahrzeug (10) auf der maximalen Geschwindigkeit (Vₘ) des Manövers zu halten, und
- ein drittes Intervall (III), das dem Ende des Parkmanövers entspricht und in dem das elektronische Modul (34) die Verringerung der Geschwindigkeit (V_{d}) von der maximalen Geschwindigkeit (Vₘ) des Manövers bis zu einer Geschwindigkeit von Null des Anhaltens am Ende des Manövers befiehlt.

3. Vorrichtung zur Unterstützung gemäß Anspruch 2, **dadurch gekennzeichnet, dass** das dritte Intervall (III) einen Schritt aufweist, in dem das elektronische Modul (34) eine Verringerung der Geschwindigkeit (V_{d}) befiehlt, die durch eine merkliche Verlangsamung geprägt ist, um den Fahrer des Fahrzeugs über das Entdecken des Hindernisses (32) zu informieren.

4. Vorrichtung zur Unterstützung gemäß irgend einem der vorhergehenden Ansprüche, **dadurch gekennzeichnet, dass** die Mittel zur Entdeckung hintere und/oder vordere Abstandssensoren in Längsrichtung (16, 18) aufweisen, die den Abstand (d) des Fahrzeugs (10) im Vergleich zu Hindernissen (32) bestimmen können, die sich in den Bereichen hinter und/oder vor längs und/oder seitlich des Fahrzeugs (10) befinden.

5. Vorrichtung zur Unterstützung gemäß irgend einem der vorhergehenden Ansprüche, **dadurch gekennzeichnet, dass** die mit Mitteln zur Entdeckung seitliche Abstandssensoren (28) aufweisen, die den Abstand (d) des Fahrzeugs (10) im Vergleich zu Hindernissen (32) bestimmen können, die sich in den Bereichen seitlich des Fahrzeugs (10) befinden.

6. Vorrichtung zur Unterstützung gemäß irgend einem der vorhergehenden Ansprüche, **dadurch gekennzeichnet, dass** die Sensoren, die mit Bauteilen des Fahrzeugs (10) verbunden sind, insbesondere einen Sensor (38) für die Drehzahl des Motors (40), einen Sensor (42) für die Stellung der Kupplung (44), einen Sensor (46) für den in einem Getriebe (48) eingelegten Gang des Fahrzeugs (10), einen Sensor (50) für den Zustand der Bremsen (51) des Fahrzeugs (10) und ein System zur Wegstreckenmessung (52) umfassen, das mit den Rädern des Fahrzeugs verbunden ist.

7. Vorrichtung zur Unterstützung gemäß dem vorhergehenden Anspruch, **dadurch gekennzeichnet, dass** das System zur Wegstreckenmessung (52) Mittel zur Erfassung der Umdrehung von zwei gegenüberliegenden Rädern der selben Achse (54) des Fahrzeugs (10) aufweist.

8. Vorrichtung zur Unterstützung gemäß irgend einem der vorhergehenden Ansprüche, **dadurch gekennzeichnet, dass** die Elemente der Beweglichkeit des Fahrzeugs (10), die durch das elektronische Steuermodul gesteuert werden, insbesondere eine Lenkung (58), einen Motor (40), eine Übersetzung (44, 48) und Bremsen (51) des Fahrzeugs (10) umfassen.

9. Vorrichtung zur Unterstützung gemäß irgend einem der vorhergehenden Ansprüche, **dadurch gekennzeichnet, dass** sie manuell vom Fahrer des Fahrzeugs (10) aktiviert wird, nachdem er ein Element der Beweglichkeit des Fahrzeugs betätigt hat, insbesondere ein Bedienteil (48) zum Einlegen des Rückwärtsgangs des Fahrzeugs.

10. Vorrichtung zur Unterstützung gemäß irgend einem der Ansprüche 1 bis 8, **dadurch gekennzeichnet, dass** sie automatisch aktiviert wird, wenn der Fahrer ein Element der Beweglichkeit des Fahrzeugs betätigt, insbesondere ein Bedienteil (48) zum Einlegen des Rückwärtsgangs des Fahrzeugs.

## Claims

1. A device assisting the control of the movements of an automobile vehicle (10), in particular with a view to a parking manoeuvre, of the type in which the vehicle (10) comprises at least one end portion (14, 16, 17) provided with means for detecting an obstacle (32), in particular at least one longitudinal and/or lateral proximity sensor (16, 18, 28)which transmits longitudinally and/or laterally, in a zone close to the vehicle (10), at least one measurement beam (20, 24, 30) to determine the distance (d) between the end (14, 16, 17) of the vehicle and the obstacle (32), of the type which comprises an electronic control module (34) which is adapted to receive data representative of the vehicle movements from detection means and a plurality of sensors (38, 42, 46, 50) connected to members of the vehicle (10) in particular to control the vehicle movements when the assistance device is actuated, the electronic control module (34) controlling the vehicle mobility components according to a law of decreasing speed (V_{d}) of the vehicle (10), **characterised in that** this law of speed is linear at least in the vicinity of this obstacle (32).

2. An assistance device as claimed in claim 1, **characterised in that** the law of speed (V_{d}) is a continuous law which is defined according to three successive intervals (I, II, III) of decreasing distance (d) of the vehicle (10) with respect to the obstacle (32):
- a first interval corresponding to the beginning of an assisted manoeuvre in which the electronic module (34) controls a speed increase of the vehicle (10) up to a maximum manoeuvring speed (Vₘ),
- a second interval (II) in which the electronic module (34) controls the maintenance of the vehicle (10) at the maximum manoeuvring speed (V_{d}) , and
- a third interval (III) corresponding to the end of the parking manoeuvre and in which the electronic module controls the reduction of the speed (V_{d}) from the maximum manoeuvring speed (Vₘ) to a zero speed of stoppage at the end of the manoeuvre.

3. An assistance device as claimed in claim 2, **characterised in that** the third interval (III) comprises a stage in which the electronic module (34) controls a reduction of the speed (V_{d}) which is marked by a substantial deceleration in order to inform the driver of the vehicle that an obstacle (32) has been detected.

4. An assistance device as claimed in any one of the preceding claims, **characterised in that** the detection means comprise longitudinal rear and/or forward proximity sensors (16, 18) which are adapted to determine the distance (d) of the vehicle (10) with respect to obstacles (32) located in the longitudinal and/or lateral rear and/or forward zones of the vehicle (10).

5. An assistance device as claimed in any one of the preceding claims, **characterised in that** the detection means comprises lateral proximity sensors (28) which are adapted to determine the distance (d) of the vehicle (10) with respect to obstacles (32) located in lateral zones of the vehicle (10).

6. An assistance device as claimed in any one of the preceding claims, **characterised in that** the sensors connected to components of the vehicle (10) in particular comprise a sensor (38) of the speed of the engine (40), a sensor (42) of the position of a clutch (44), a sensor (46) of the gear engaged in a gear box (48) of the vehicle (10), a sensor (50) of the state of the brakes (51) of the vehicle (10) and an odometric system (52) connected to the wheels of the vehicle.

7. An assistance device as claimed in the preceding claim, **characterised in that** the odometric system (52) comprises means for sensing the rotation of two opposing wheels of a same axle (54) of the vehicle (10).

8. An assistance device as claimed in any one of the preceding claims, **characterised in that** the mobility components of the vehicle (10) controlled by the electronic control module in particular comprise a steering (58), an engine (40), a transmission (44, 48) and brakes (51) of the vehicle (10).

9. An assistance device as claimed in any one of the preceding claims, **characterised in that** it is actuated manually by the driver of the vehicle (10) after acting on a mobility component of the vehicle, in particular on a member (48) engaging the reverse gear of the vehicle.

10. An assistance device as claimed in any one of claims 1 to 8, **characterised in that** it is actuated automatically when the driver acts on a mobility component of the vehicle, in particular on a member (48) engaging the reverse gear of the vehicle.
